# EUROPEAN PATENT SPECIFICATION

(11) **EP 1 994 386 B1**
(45) Date of publication and mention of the grant of the patent: **30.12.2009**
(21) Application number: 07705331.2
(22) Date of filing: 09.03.2007
(51) Int. Cl.: G01L 3/14

(54) **TORQUE MEASUREMENT IN FLEXIBLE DRIVE COUPLING PLATE**
DREHMOMENTMESSUNG IN EINER KOPPELPLATTE EINES FLEXIBLEN ANTRIEBS
MESURE DE COUPLE DANS UNE PLAQUE D'ACCOUPLEMENT MOTEUR FLEXIBLE

(30) Priority: 15.03.2006 GB 0605240
(43) Date of publication of application: 26.11.2008
(73) Proprietor: Transense Technologies PLC, Bicester, Oxfordshire OX25 5HD (GB)
(72) Inventor: LOHR, Raymond, David, Buckinghamshire HP18 9AA (GB)
(74) Representative: Tranter, Andrew David
(86) International application number: PCT/GB2007/000824
(87) International publication number: WO 2007/104939

(56) References cited:
- EP-A2- 1 353 159
- WO-A-2004/106877
- WO-A-2005/075950
- DE-A1- 4 208 522
- GB-A- 2 417 322

## Description

The present invention relates to a drive coupling assembly incorporating a flexible drive coupling plate, and more particularly to such an assembly incorporating a sensor for measuring torque transmitted through the coupling plate.

Modern internal combustion engines for automobiles, utilise engine management systems which rely on dynamometer derived data for torque output as measured on a relatively small number of test engines. This approach cannot account for the variance in performance of volume produced engines, either across the range of production tolerances or over service life, and is therefore sub-optimal.

Engine torque output is dependent on a number of variables including: rpm, ignition advance, airflow, fuel flow, barometric pressure and ambient temperature. In a modem vehicle, some or all of these variables are measured continuously and used in conjunction with a multi-dimensional memory map stored in the engine control unit (ECU) in order to predict torque.

Actual engine output torque is controlled by varying air flow, fuel flow and ignition advance in response to driver demand, i.e. the position of the accelerator pedal, and in accordance with ambient temperature and pressure conditions. Engine management maps may be determined in order to minimise fuel consumption and /or emissions or, for example in a racing car, to maximise torque and/or power.

In principle an internal combustion engine can be thought of as a "torque pump". Within the discipline of control engineering, it is generally recognised that one of the most effective and accurate ways in which to control the output of a device is to directly measure the output variable of interest and use it as a real-time negative feedback signal in a closed loop control system. Since the principal output of an automotive internal combustion engine is torque, then a torque sensor placed as close as possible to the engine output, i.e. the rear end of the crankshaft, offers the ideal route to improved engine control.

A further benefit of accurate real time torque measurement is in the control of automatic transmissions since, if gear ratio changes are carried out at zero torque or other controlled torque values, improvements can be made in gear change smoothness or speed. The ability to measure torque directly at the engine output can lead to a significant step forward in this application.

Historically, direct measurement of torque in a powertrain has been primarily restricted to engine research and development using techniques such as:
- a brake dynamometer to measure engine or engine + transmission torque outputs. This approach effectively averages the torque output over a time period dependent on the bandwidth of the instrumentation. However, because of rotary inertias distributed throughout the powertrain, this technique cannot yield the instantaneous torque output of the engine at the crankshaft output.
- strain gauged torque cells are used routinely in R&D applications. However they are far too expensive for use in customer vehicles. They also require slip ring systems to transmit power and signals between the rotating powertrain and the stationary chassis or rig.
- magneto-elastic torque sensors have been applied to test vehicles and some racing vehicles. They are applicable to shaft mounting and require typically 20 - 50mm of shaft length for their installation. Such space is at a premium in production powertrains and may be unavailable in systems incorporating automatic transmissions. In addition magneto-elastic sensors are susceptible to stray magnetic fields which abound in production vehicles due to multiple electric motors and solenoids.

In an automatic transmission equipped automotive powertrain, the engine output is transferred from a bolted flange at the end of the crankshaft, via a flexible steel disk (flexplate), to the torque convertor by a second group of bolted fastenings (typically 3 or 4) on a significantly larger radius. The flexplate also carries the starter ring gear around its periphery.

Torque generated by the engine is transmitted by developing shear strain within the disk material, which in principal can be sensed by applying at least one pair of linear strain transducers oriented at +/- 45° to a line radiating from the centre of the flexplate. This approach to torque measurement in an essentially rigid disk component is understandable to those skilled in the art of transducer design and disclosed in DE 4208522. GB 2 417 322 discloses a drive coupling system comprising at least one shaft drivingly coupled to a flexplate for transmitting drive from the shaft, the flexplate having a plurality of circumferentiall distributed axial through-apertures formed therein so as to define, between each pair of adjacent apertures, a radially extending web, a plurality of circumferentially distributed axial fastening holes extending through the flexplate for drivingly attaching it to an output member, and a strain sensor for measuring the shear strain field on said flexplate. However, a flexible disk coupling component such as a flexplate, in its normal duty, is potentially subject to three forces and two couples apart from the desired couple (i.e. in-plane torque), and these extraneous loads can reduce the accuracy of the torque measured using a strain sensor mounted on the disk.

In order to solve this problem, the present invention provides a drive coupling system according to claim 1.

A drive coupling system in accordance with the invention has the advantage that locating of the or each sensor on the local neutral axis of the disc coupling component minimises superimposed bending strains due to couples acting out-of-plane on the coupling component.

Preferably, a plurality of circumferentially extending slots are formed in the disc coupling component between each fastening hole and the outer edge of the disc coupling component. These circumferentially extending slots absorb, to a significant extent, the out-of-plane couples and adjust the axial compliance of the coupling component, which thereby increases the measuring accuracy of the sensor.

Several techniques are involved in providing accurate measurement of torque and rejection of unwanted signals, while maintaining the original design axial compliance, and non contacting sensing capability:
1) The distribution of holes on the drive coupling plate, designed to achieve a certain level of axial compliance, is modified so as to generate a small number (typically 3 or 4) of webs to concentrate the shear strain.
2) The active surface of the measuring sensors are placed on the local neutral axis of the drive coupling plate, thereby minimising superimposed bending strains due to couples acting out-of-plane on the drive coupling plate.
3) The measurement sensor or sensors are placed symmetrically on the web(s) so as to minimise strains due to twisting - again due to couples acting out-of-plane on the drive coupling plate.
4) Decoupling slots are introduced between the torque convertor fastening holes and the starter ring in order to absorb, to a significant extent, the out-of-plane couples and to adjust the axial compliance.
5) The thickness of the drive coupling plate may be increased, and the web widths reduced, in order to reduce bending strains (maximised at the surface) while maintaining the desired shear strain (distributed through the thickness) and to physically separate these strain components and to adjust the axial compliance.
6) The flatness of the drive coupling plate is improved to minimise strains due to clamping the drive coupling plate to the crankshaft flange.
7) the thickness tolerance is reduced to minimise production variation in the sensitivity of the drive coupling plate which is now essentially a transducer body.
8) The material is re-specified to ensure a sufficiently high elastic limit so the sensor performance is linear and does not exhibit hysteresis.
9) The torque transducers employed are surface acoustic wave (SAW) devices, which communicate in a non contacting manner (not requiring slip rings) and not requiring active electronic components on the drive coupling plate (no separate power supply).

Preferably, three or four through apertures are provided which correspondingly form three or four radial webs. In a particularly preferred embodiment, the through-apertures and fastening holes are equi-spaced on a common pcd.

Preferably, the or each strain sensor is a surface acoustic wave (SAW) device, which communicates in a non-contacting manner and which does not require active electronic components on the coupling component.

The or each sensor is preferably symmetrically located on its associated web, in particular on the radial centre line thereof. In this way, non-symmetrical effects, such as strains due to twisting resulting from couples acting out of plane on the coupling component are further minimised.

The webs are also preferably narrow so as to further decouple sensor output from deflections caused by unwanted forces and moments.

Preferably, the coupling component is a flexplate.

Advantageously, each aperture comprises a pair of wings which are symmetrical about a radial centre line of the aperture. The apertures are furthermore preferably symmetrically distributed around the coupling component, as are the fastening holes.

In order that the invention may be well understood, there will now be described an embodiment thereof, given by way of example, reference being made to the accompanying drawings, in which:
Figure 1 is a front view of a flexplate according to a first embodiment of the invention;
Figure 2 is a front view of a flexplate according to a second embodiment of the invention;
Figure 3 is a graph showing results of a finite element analysis for a conventional flexplate; and
Figure 4 is a graph showing results of corresponding finite element analysis for a flexplate according to the invention.

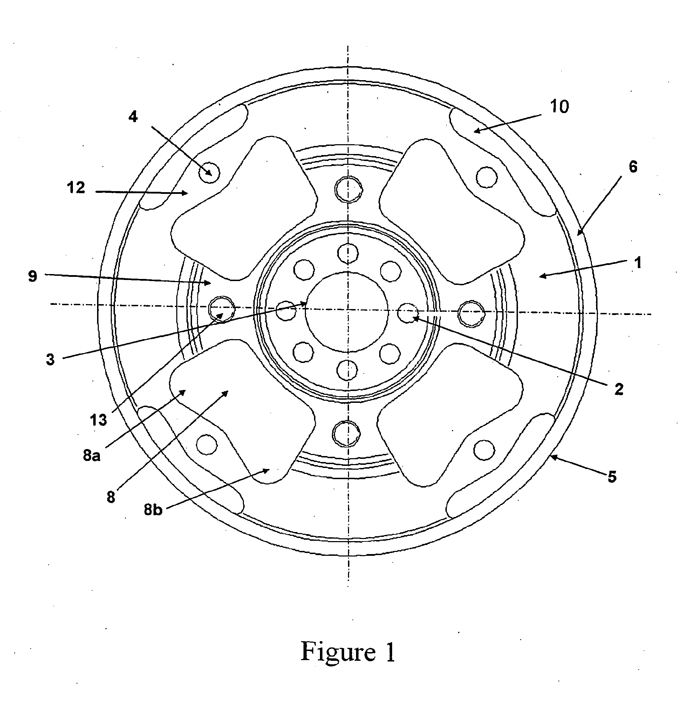

Referring first to Figure 1, there is shown a flexplate 1 which forms part of a drive coupling assembly. The flexplate 1 is an annular member having a first plurality of fastening holes 2, distributed around a first inner radius proximate to the inner circumferential edge 3 of the plate, for drivingly coupling the flexplate 1 to a flange coupling on an end of the crankshaft (not shown). A second set of four fastening holes 4 is distributed around a second radius proximate to the outer circumferential edge 5 of the flexplate 1, and a starter ring gear 6 is formed on the outer circumferential edge 5 of the flexplate 1, with which, in use, a gear of a starter motor (not shown) meshes for rotating the crank shaft.

The flexplate 1 further includes a plurality of through apertures 8 - in the illustrated embodiment four, which are equi-angularly distributed around the flexplate on a common radius intermediate the first and second radii, and which are separated by four radially extending webs 9. Each aperture 8 has reflectional symmetry about a centre line which extends along a radius of the flexplate 1 and is butterfly shaped with a wing 8a, 8b extending on either side of the centre line. Each of the second set of four fastening holes 4 is associated with one of the apertures 8, lying on the radius of the flexplate 1 extending along the centre line of the associated aperture 8. A circumferentially extending through slot 10 is formed in the flexplate 1 radially outward of each aperture 8 and its associated second fastening hole 4, each slot 10 extending symmetrically on either side of the radius which extends through the centre line of the associated aperture 8 such that the fastening hole 4 is formed carried on decoupling flexures 12.

A countersunk spotface 13 is formed in at least one of the webs 9 (in the illustrated embodiment in all four of the webs 9) on the centre line thereof proximate to the inner radial edge of the flexplate 1 in which is mounted a SAW sensor which measures the strain in the web from which the torque transmitted through the flexplate 1 can be calculated. The or each spotface 13 extends substantially half way through the thickness of the web so that the SAW sensor lies in the plane of the neutral axis of the flexplate.

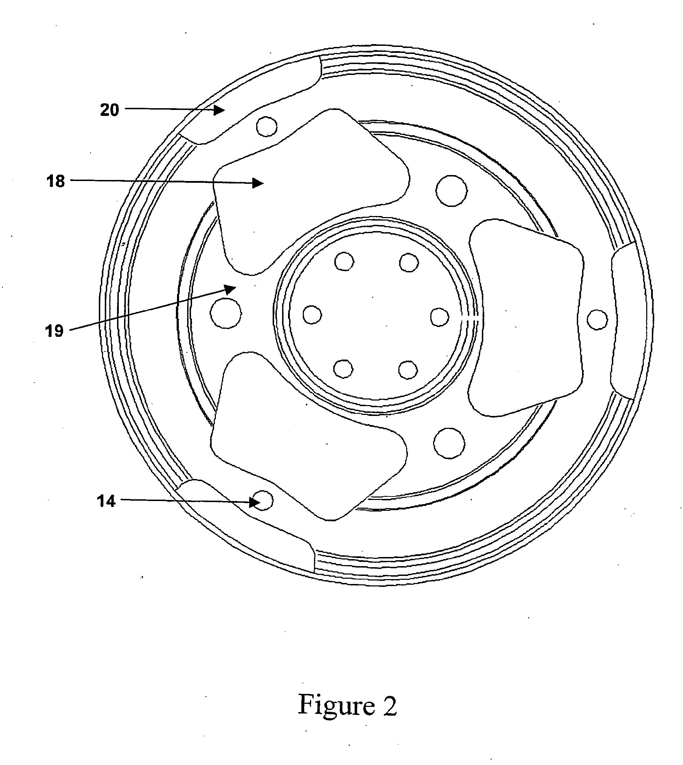

Figure 2 illustrates a second embodiment of the invention which is similar to the first except that only three apertures 18 are provided which form three radial webs 19, three slots 20 and three outer fastening holes 14 being provided, one associated with each aperture 18. Accordingly, the flexplate of second embodiment has three-way rotational symmetry as compared with the four way rotational symmetry of the first embodiment.

Although the circumferential slots 10, 20 provide advantageous improvements to the measuring accuracy of the sensor, their presence is not critical to operation of the invention and significant improvements over conventional systems is still achieved if they are not present.

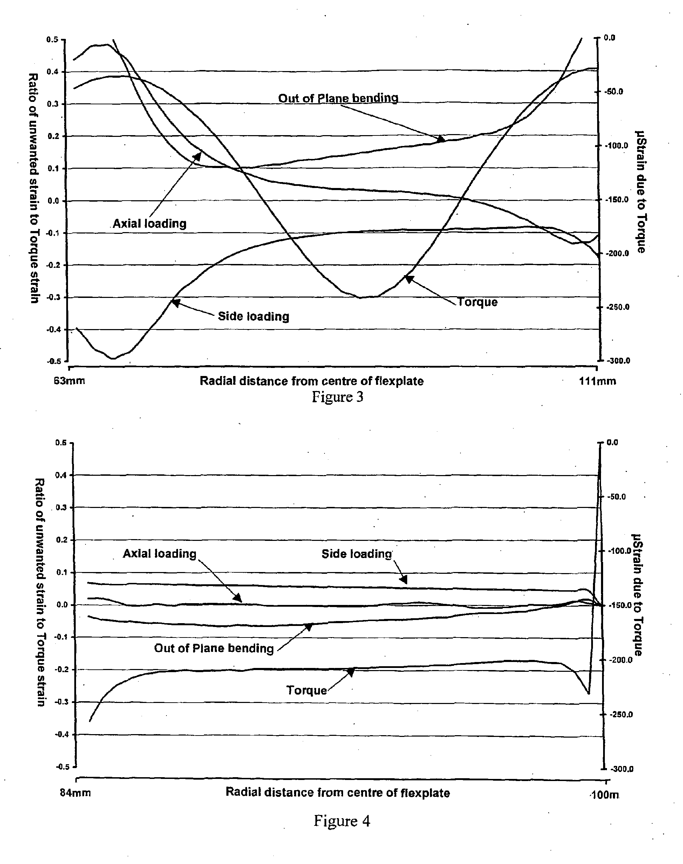

Figures 3 and 4 illustrate graphically the improvements in measurement sensitivity and accuracy afforded by the present invention. Figure 3 shows results of a finite element analysis for a conventional flexplate, illustrating the distribution of shear strain (right hand axis) due to engine "Torque" along a radial line between 63mm and 111mm from the flexplate centre and the distribution of "unwanted shear strains due to axial and side loading and out-of-plane moments" (left hand axis) along the same radial line, but expressed as a decimal fraction of the "wanted shear strain due to engine Torque".

In comparison, Figure 4 shows results of corresponding analysis for a flexplate according to the invention, illustrating the distribution of shear strain (right hand axis) due to engine "Torque" along a radial line between 84mm and 100mm from the flexplate centre, and the distribution of "unwanted shear strains due to axial and side loading and out of plane moments" (left hand axis) along the same radial line, again expressed as a decimal fraction of the "wanted shear strain due to Torque".

As can be seen from a comparison of these two graphs, the system of the invention greatly reduces the ratio of unwanted to wanted shear strain, and also affords the additional benefit of providing a much flatter region of unwanted shear strain, making the placement of the sensor less critical compared with conventional systems.

## Claims

1. A drive coupling system comprising at least one shaft drivingly coupled to a flexplate (1) for transmitting drive from the shaft, the flexplate (1) having a plurality of circumferentially distributed axial through-apertures (8) formed therein so as to define, between each pair of adjacent apertures (8), a radially extending web (9), a plurality of circumferentially distributed axial fastening holes (4) extending through the flexplate (1) for drivingly attaching it to an output member, and a strain sensor for measuring the shear strain field on said flexplate (1), **characterized in that** said strain sensor is mounted in a countersunk recess (13) formed in an axial surface of one of the webs (9) such that the sensor lies at least proximate to the local neutral axis of the flexplate (1).

2. A drive coupling system according to claim 1, further including a plurality of circumferentially extending slots (10) formed in the flexplate (1) between each fastening hole (4) and the outer edge (5) of the flexplate (1).

3. A drive coupling system according to claim 2, wherein each fastening hole (4) is located radially between one of said through apertures (8) and one of said circumferentially extending slots (10).

4. A drive coupling system according to any of the preceding claims, wherein each countersunk recess (13) is countersunk to a depth such that the sensor lies substantially on the local neutral axis of the flexplate (1).

5. A drive coupling system according to any of the preceding claims, wherein only three or only four through apertures (8) are provided which correspondingly form three or four radial webs (9).

6. A drive coupling system according to any of the preceding claims, wherein the or each strain sensor is a surface acoustic wave (SAW) device, which communicates in a non-contacting manner and which does not require active electronic components on the coupling component.

7. A drive coupling system according to any of the preceding claims, wherein the or each sensor is symmetrically located on its associated web (9).

8. A drive coupling system according to claim 7, wherein the or each sensor is located on the radial centre line of its associated web (9).

## Patentansprüche

1. Antriebskupplungssystem, umfassend wenigstens eine Welle, die antriebstechnisch mit einer Flexplatte (1) gekuppelt ist, um einen Antrieb von der Welle her zu übertragen, wobei die Flexplatte (1) eine Mehrzahl von am Umfang verteilten axialen Durchgangsöffnungen (8), die darin derart ausgebildet sind, dass zwischen jedem Paar von benachbarten Öffnungen (8) ein sich radial erstreckender Steg (9) festgelegt ist, eine Mehrzahl von am Umfang verteilten axialen Befestigungslöchern (4), die sich durch die Flexplatte (1) erstrecken, um diese an einem Ausgabeglied antriebstechnisch anzubringen, und einen Beanspruchungssensor zum Messen des Scher- bzw. Schubbeanspruchungsfeldes an der Flexplatte (1) aufweist, **dadurch gekennzeichnet, dass** der Beanspruchungssensor in einer versenkten Ausnehmung (13) montiert ist, die in einer axialen Oberfläche von einem der Stege (9) derart ausgebildet ist, dass der Sensor wenigstens in der Nähe der örtlichen neutralen Achse der Flexplatte (1) liegt.

2. Antriebskupplungssystem nach Anspruch 1, des Weiteren beinhaltend eine Mehrzahl von sich am Umfang erstreckenden Schlitzen (10), die in der Flexplatte (1) zwischen jedem Befestigungsloch (4) und der äußeren Kante (5) der Flexplatte (1) ausgebildet sind.

3. Antriebskupplungssystem nach Anspruch 2, wobei jedes Befestigungsloch (4) radial zwischen einer der Durchgangsöffnungen (8) und einem der sich am Umfang erstreckenden Schlitze (10) befindlich ist.

4. Antriebskupplungssystem nach einem der vorhergehenden Ansprüche, wobei jede versenkte Ausnehmung (13) derart tief versenkt ist, dass der Sensor im Wesentlichen auf der örtlichen neutralen Achse der Flexplatte (1) liegt.

5. Antriebskupplungssystem nach einem der vorhergehenden Ansprüche, wobei lediglich drei oder lediglich vier Durchgangsöffnungen (8) vorgesehen sind, die entsprechend drei oder vier radiale Stege (9) bilden.

6. Antriebskupplungssystem nach einem der vorhergehenden Ansprüche, wobei der oder jeder Beanspruchungssensor eine SAW-Vorrichtung (Surface Acoustic Wave SAW, oberflächenakustische Welle) ist, die auf berührungslose Weise kommuniziert und die keine aktiven elektronischen Komponenten an der Kupplungskomponente benötigt.

7. Antriebskupplungssystem nach einem der vorhergehenden Ansprüche, wobei der oder jeder Sensor symmetrisch an seinem zugehörigen Steg (9) befindlich ist.

8. Antriebskupplungssystem nach Anspruch 7, wobei der oder jeder Sensor auf der radialen Mittellinie seines zugehörigen Steges (9) befindlich ist.

## Revendications

1. Système d'accouplement moteur comprenant au moins un arbre couplé de façon menante à une plaque flexible (1) pour transmettre l'entraînement de l'arbre, la plaque flexible (1) ayant une pluralité d'ouvertures traversantes axiales circonférentiellement distribuées (8) ménagées dans celle-ci de manière à définir, entre chaque paire d'ouvertures adjacentes (8), une bande s'étendant radialement (9), une pluralité de trous de fixation axiaux (4) distribués circonférentiellement s'étendant à travers la plaque flexible (1) pour la fixer de façon menante à un élément de sortie, et un capteur de contraintes pour mesurer un champ de contraintes de cisaillement sur ladite plaque flexible (1), **caractérisé en ce que** ledit capteur de contraintes est installé dans un évidement contre-dépouillé (13) formé dans une surface axiale d'une des bandes (9) de sorte que le capteur se situe au moins à proximité de l'axe local neutre de la plaque flexible (1).

2. Système d'accouplement moteur selon la revendication 1, comprenant en outre une pluralité de fentes s'étendant circonférentiellement (10) formées dans la plaque flexible (1) entre chaque trou de fixation (4) et le bord externe (5) de la plaque flexible (1).

3. Système d'accouplement moteur selon la revendication 2, dans lequel chaque trou de fixation (4) se situe radialement entre une desdites ouvertures traversantes (8) et une desdites fentes s'étendant circonférentiellement (10).

4. Système d'accouplement moteur selon l'une quelconque des revendications précédentes, dans lequel chaque évidement contre-dépouillé (13) est contre-dépouillé à une profondeur telle que le capteur se situe sensiblement sur l'axe local neutre de la plaque flexible (1).

5. Système d'accouplement moteur selon l'une quelconque des revendications précédentes, dans lequel seulement trois ou seulement quatre ouvertures traversantes (8) sont réalisées qui forment d'une manière correspondante trois ou quatre bandes radiales (9).

6. Système d'accouplement moteur selon l'une quelconque des revendications précédentes, dans lequel le ou chaque capteur de contraintes est un dispositif à ondes acoustiques de surface (SAW), qui communique d'une manière sans contact et qui ne requiert pas de composants électroniques actifs sur le composant de couplage.

7. Système d'accouplement moteur selon l'une quelconque des revendications précédentes, dans lequel le ou chaque capteur se situe symétriquement sur sa bande associée (9).

8. Système d'accouplement moteur selon la revendication 7, dans lequel le ou chaque capteur se situe sur la ligne radiale centrale de sa bande associée (9).
